# EUROPÄISCHE PATENTSCHRIFT

(11) **EP 0 614 595 B1**
(45) Veröffentlichungstag und Bekanntmachung des Hinweises auf die Patenterteilung: **05.03.1997**
(21) Anmeldenummer: 92923805.3
(22) Anmeldetag: 26.11.1992
(51) Int. Cl.: H04N 13/04

(54) **VERFAHREN UND VORRICHTUNG ZUR WIEDERGABE DREIDIMENSIONALER BILDER**
METHOD AND DEVICE FOR REPRODUCING THREE-DIMENSIONAL IMAGES
PROCEDE ET DISPOSITIF POUR LA REPRODUCTION D'IMAGES TRIDIMENSIONNELLES

(30) Priorität: 27.11.1991 DE 4138893
(43) Veröffentlichungstag der Anmeldung: 14.09.1994
(73) Patentinhaber: LOS LASER OPTIK SYSTEM GMBH & CO. KG, 55124 Mainz (DE)
(72) Erfinder: RUDNITZKI, Ottmar, D-6500 Mainz 23 (DE)
(74) Vertreter: KEIL & SCHAAFHAUSEN Patentanwälte
(86) Internationale Anmeldenummer: EP9202732
(87) Internationale Veröffentlichungsnummer: WO9311644

(56) Entgegenhaltungen:
- FR-A- 2 571 866
- PATENT ABSTRACTS OF JAPAN vol. 13, no. 144 (E-740)(3492) 10. April 1989 & JP-A-63 306 795
- PATENT ABSTRACTS OF JAPAN vol. 15, no. 357 (C-866)10. September 1991 & JP-A-31 41 932

## Beschreibung

Die Erfindung bezieht sich auf ein Verfahren zur Aufnahme und Wiedergabe dreidimensionaler Bilder mit zwei Kameras, die auf eines oder mehrere abzubildende Objekte fokussiert werden, mit einem Monitor, mit Verarbeitungseinheiten für von den Kameras erzeugte Bildsignale und mit jeweils zwei, den Augen eines Betrachters zugeordneten Blenden, die wechselweise betätigt werden, und auf Vorrichtungen zur Durchführung des Verfahrens.

Eine derartige Vorrichtung ist aus der DE-C-38 08 969 bekannt. Der Vorgang der Tiefenwahrnehmung wird beim stereoskopischen Fernsehen durch Übertragung von jeweils mit zwei Kameras aufgenommenen Rechts- und Linksbildern hervorgerufen, die derart einander überlagert werden, daß für den Betrachter ein räumlicher Eindruck entsteht. Die Überlagerung geschieht mittels einer Spezialbrille mit einer Blendenanordnung, die so betätigt wird, daß der Betrachter jeweils nur mit einem Auge die für dieses bestimmte Information der entsprechenden Kamera sieht. Die beiden Kameras müssen auf das jeweils dreidimensional darzustellende Objekt fixiert und scharf eingestellt werden. Bei Positionsänderungen des zu betrachtenden Objekts oder bei einer Einstellung auf ein anderes Objekt sind die Kamerapositionen entsprechend zu verändern, d. h. die Kameras müssen erneut fokussiert werden. Die Anpassung der Kamerapositionen und Kameraeinstellungen bei Lageänderungen der Betrachtungsstelle ist häufig umständlich und zeitraubend oder bei manchen Gegebenheiten, z. B. in der Medizin, nicht immer möglich.

Eine Vorrichtung der eingangs beschriebenen Art ist auch aus dem JP-A-3141932 (Patent Abstracts of Japan, Vol. 15, No. 357 (C-866), 10. September 1991) bekannt. Bei dieser Vorrichtung werden zwei auf ein Objekt fokussierbare Fernsehkameras von einem Synchronisiersignalgenerator gesteuert. Die Bildinformationen der beiden Kameras werden nacheinander in eine Videoverarbeitungseinheit eingegeben, an die ein Monitor angeschlossen ist und die zwei Blenden steuert. Um den Eindruck stereoskopischer Bilder zu verstärken, wird die Parallaxe künstlich verändert.

Bei einer aus Patent Abstracts of Japan, Vol. 13, No. 144 (E 740) (3492) 10. April 1989, (JP-A-63306795) bekannten Vorrichtung zur Erzeugung dreidimensional wiedergebbarer Bilder wird ein Objekt von Röntgenstrahlen durchleuchtet, die nach dem Hindurchtreten durch das Objekt auf einen Bildverstärker fallen, dem über einen Umschalter zwei Bildspeicher nachgeschaltet sind. An die Bildspeicher ist ein D/A-Umsetzer angeschlossen, dem ein Monitor nachgeschaltet ist. Der Monitor wird durch eine Brille mit wechselweise betätigten Blenden betrachtet. Die Strahlenquelle wird zur Erzeugung jeweils zweier aufeinanderfolgender Abbildungen in ihrer Position verändert. Für eine Standardeinstellung des Abstands der Strahlenquelle vom Bildverstärker und des Abstand des Objekts vom Bildverstärker wird eine Ablenkgröße für ein rechts und eine links fokussiertes Bild bestimmt. Bei anderen Einstellungsbedingungen wird eine digitale Verschiebungsgröße für die Bildinformationen der Standardeinstellung und den Einstellungsbedingungen gewonnen.

Bekannt ist auch die Erzeugung pseudostereoskopischer Fernsehbilder aus monoskopischen Bildsignalen, die zeitlich aufeinanderfolgende monoskopische Bilder repräsentieren. Jeweils zwei um einen gewählten Teilbildabstand gegeneinander versetzte Teilbilder werden in zu einer Anaglyphenbrille passenden Koplementärfarben einander überlagert. Jedes Teilbild wird in Form eines Farbauszugs aus dem gleichen monoskopischen Bild abgeleitet. Der Teilbildabstand ist über der Höhe des Schirmbilds veränderbar. Das Schirmbild wird mit einer Anaglyphenbrille betrachtet (DE-A-35 39 440).

Weiterhin ist aus der US-A-4 819 064 die Erzeugung stereoskopischer Fernsehbilder mit zwei Kameras, nachgeschaltete Verarbeitungseinheiten und einem Bildschirm bekannt, der durch eine Flüssigkristallbetrachtungseinrichtung beobachtet wird. Die optischen Achsen der beiden Kameras werden auf einen Konvergenzpunkt ausgerichtet, der von den Kameras weiter entfernt ist als der Bereich mit den Objekten, die abgebildet werden sollen. Jeweils ein Bild der rechten und linken Kamera wird abwechselnd auf dem Bildschirm dargestellt, wobei die Flüssigkristallbetrachtungseinrichtung in Synchronismus abwechselnd den Blick für das linke und rechte Auge freigibt.

Für die Betrachtung von rechten und linken Bildern, mit denen ein stereoskopisches Bild wahrgenommen werden soll, ist aus der US-A-4 884 876 eine Brille bekannt, bei der Flüssigkristalle zur Freigabe und Sperrung des Blickes auf die Bilder verwendet werden.

Bei einer anderen aus der US-A-4 736 246 bekannten Vorrichtung zur Erzeugung stereoskopischer Bilder werden zwei Kameras verwendet, um Bildinformationen für das linke und rechte Auge zu erzeugen. Die beiden Kameras werden synchron gesteuert, um horizontale und vertikale Ablenkungen zu erzeugen. Die Bildsignale der linken Kamera werden auf dem Bildschirm in den ungeradzahligen Zeilen dargestellt, während die Bildsignale der rechten Kamera in den geradzahligen Zeilen des Bildschirms dargestellt werden. Die Bildsignale werden in der Frequenz verdoppelt dargestellt. In Synchronismus damit wird ein Betrachtungsgerät gesteuert.

Aus der DE-A-36 23 576 ist ferner bekannt, zur elektronischen Übertragung und/oder Aufzeichnung sowie anschließender Wiedergabe von stereoskopischen, unter verschiedenen Blickwinkeln als monoskopische Teilbilder aufgenommenene Fernsehbildern zwei Aufnahmekameras und zwei Monitore zu verwenden, von denen jeder einer Kamera zugeordnet ist. Durch optische Umlenkmittel wird das Sichtfeld für jedes Auge eines Betrachters auf die monoskopischen Teilbilder des diesem Auge zugeordneten Monitors eingeschränkt. Mittels eines Multiplexers werden aus den synchron abgetasteten Teilbildern der Kameras elektronische Halbbilder ausgewählt, die über einen gemeinsamen Kanal übertragen und/oder auf einem gemeinsamen Träger aufgezeichnet werden können. Anschließend werden sie mit einer weiteren Multiplexanordnung auf die Kameras gegeben.

Bekannt ist auch ein stereoskopisches Abbildungssystem mit einem Bildkodierer, der eine variable optische Verzögerungseinrichtung aufweist, die stirnseitig zu einer Bildquelle angeordnet ist. Ein Bilddekodierer besteht nur aus passiven optischen Elementen. Die Verzögerungseinrichtung bewirkt selektiv einer Verzögerung von O (Null) oder einer Halbperiode. Zur Dekodierung werden Verzögerungsplatten verwendet. Es werden Breitbandleuchtstoff-Bildquellen benutzt (DE-A-3 607 629).

Schließlich ist es aus der DE-A-41 34 033 bekannt, die Signale zweier stereoskopischer Teilbilder, die mit zwei Kameras aufgenommen sein können, über eine Umschalteinheit in sequentieller Folge einer Verarbeitungseinheit zuzuführen, mit der im wesentlichen mit Hilfe zweier Halbbildspeicher die Auslesefrequenz der beiden Teilbilder verdoppelt wird. Diese Teilbilder werden alternierend der Endstufe eines Fernsehgerätes zugeführt und abwechselnd für einen Betrachter dargestellt. Zur dreidimensionalen Wahrnehmung durch den Betrachter wird mittels ferroelektrischer Flüssigkristallblenden oder eines schaltbaren elektrooptischen Shutters jedem Auge jeweils das richtige stereoskopische Teilbild zugeführt.

Aufgabe der vorliegenden Erfindung ist es, ein Verfahren und eine Vorrichtung zur Wiedergabe dreidimensionaler Bilder mit wenigstens zwei Bildinformationen zu entwickeln, bei denen die Einstellung der Aufnahmepositionen bei einer Verschiebung der Beobachtungsebene des dreidimensional darzustellenden Objekts oder bei der Darstellung eines neuen Objekts nicht verändert werden müssen.

Diese Aufgabe wird bei einem Verfahren der eingangs genannten Art erfindungsgemäß dadurch gelöst, daß die beiden Kameras mit ihren optischen Achsen fest auf eine Konvergenzebene eingestellt sind, in der sich ihre optischen Achsen in einem Punkt schneiden, daß bei der Fokussierung der beiden Kameras auf das oder die Objekte in einer Beobachtungsebene, die einen Abstand von der Konvergenzebene hat, die von den beiden Kameras erzeugten Bildinformationen in horizontaler Richtung auf dem Monitor in einem Ausmaß versetzt zueinander dargestellt werden, das vom Abstand der Konvergenzebene von der Beobachtungsebene bestimmt wird. Die horizontale Verschiebung der Bildinformationen beruht auf der Lage der Augen des Betrachters in einer horizontalen Ebene. Mit dem vorstehend beschriebenen Verfahren ist es möglich, über eine horizontale Verschiebung der Bildinformationen zueinander oder auseinander auf einem Monitor bzw. Bildschirm die Beobachtungsebene, d. h. den Abstand, aus dem die Objekte perspektivisch beobachtet werden, zu verschieben. Statt einer Drehung der optischen Achsen werden die Kamerabilder auf dem Monitor bzw. Bildschirm gegeneinander verschoben dargestellt. Es wird dabei ein räumlicher Eindruck vom Objekt erzeugt, wie wenn die optischen Achsen der Kameras in der Beobachtungsebene auf das Objekt ausgerichtet wären. Die Verschiebung der Bilder der rechten und der linken Kamera zueinander oder auseinander auf dem Monitor entspricht der Verschiebung der Beobachtungsebene. Die Bildinformationen können auf verschiedene Art gewonnen werden. Eine Möglichkeit besteht darin, zwei Kameras vorzusehen. Es kann aber auch ein Bildsensor eingesetzt werden, der zwei Optiken und ein bildsensitives Element besitzt, das abwechselnd für die Abbildungspositionen der Optiken durch Blenden freigegeben wird. Weiterhin lassen sich Lichtleiter in Verbindung mit Bildsensoren einsetzen, um die Bildinformationen zu erzeugen. Das Verfahren erlaubt eine räumliche Betrachtung von Objekten mit einem gegenüber dem bisherigen Verfahren erheblich geringeren Aufwand, da die Bildaufnahmeelemente nicht mehr bei Veränderung der Beobachtungsebene neu eingestellt werden müssen. Die Kameras müssen nur einmal auf die ausgewählte Konvergenzebene eingestellt werden. Das oben beschriebene Verfahren läßt sich mit kommerziell verfügbaren Komponenten, d. h. mit relativ wenig Aufwand ausüben.

Gemäß einer bevorzugten Ausführungsform werden bei einer ausgewählten Beobachtungsebene, die näher an den Kameras liegt als die vorgegebene Konvergenzebene, die Bildinformationen, die von den Kameras stammen, nebeneinander entsprechend der rechten oder linken Lage der Kameras in bezug auf das oder die Objekte dargestellt, während bei einer Beobachtungsebene, die weiter von den Kameras entfernt ist als die Konvergenzebene, die Lage der dargestellten Bildinformationen gegenüber der rechten oder linken Lage der Bildaufnahmeelemente vertauscht ist.

Eine andere zweckmäßige Ausführungsform besteht darin, daß Bildinformationen der beiden Kameras digitalisiert und in einen Bildspeicher eingegeben werden, in dem die Bildinformationen der beiden Kameras entsprechend der vorgesehenen Versetzung abgespeichert werden, bevor der Bildspeicher für die Darstellung seines Inhalts auf dem Monitor bzw. Bildschirm ausgelesen wird.

Vorzugsweise werden die Bildinformationen aus den beiden Kameras nach der Digitalisierung mittels Echtzeitbildverarbeitung entsprechend der Versetzung verarbeitet und danach auf dem Monitor bzw. Bildschirm dargestellt. Die Bilder werden dabei durch eine spezielle Software beeinflußt. Neben der Verschiebung sind zusätzliche Beeinflussungen möglich. Insbesondere ist eine Bildumrechnung zur Anpassung des Blickwinkels möglich, um den dreidimensionalen Eindruck zu verstärken. Wahlweise können weitere Bildmanipulationen ausgeführt werden. Insbesondere können die zwei in unterschiedlichen Aufnahmepositionen gewonnenen Bildinformationen vor ihrer Versetzung, z. B. durch eine affine Abbildung korrigiert werden, wodurch der räumliche Eindruck auch bei größeren Entfernungen zwischen Konvergenzebene und Beobachtungsebene erhalten bleibt.

Durch zusätzlichen Einsatz des Kamerazooms oder eines simulierten Zooms durch die Echtzeitbildverarbeitung lassen sich weitere Bildeindrücke vermitteln, das Annähern eines-Objektes simulieren, die Bilddarstellungen den Sehgewohnheiten unterschiedlicher Anwender anpassen usw..

Durch das oben beschriebene Verfahren wird die Arbeit mit dreidimensionalen Betrachtungssystemen erheblich vereinfacht. Darüber hinaus werden mit dem Verfahren neue Möglichkeiten zur Verfügung gestellt, die sich in der Praxis nutzen lassen. Es ist bspw. möglich, bei räumlichen kamera- oder computergenerierten Bildern, die keine Konvergenzebene besitzen (parallele Strahlengänge), eine optimale Einstellung und einen dreidimensionalen Effekt zu erreichen. Die Einsatzmöglichkeiten sind vielfältig. Vorteilhafte Anwendungen sind z. B. in der Endoskopie und der Robotertechnik möglich.

Bei einer besonders vorteilhaften Ausführungsform, die einen eigenständigen erfinderischen Gehalt hat, werden die Abweichungen der Abbildungen des Objekts oder der Objekte von einer exakten Abbildung von wenigstens einem Abweichungen erzeugenden Bauelement in der von den Kameras zu den Bilddarstellungselementen verlaufenden Systemkette vorab festgestellt, wobei bei wenigstens einem Bauelement in der Systemkette Korrekturwerte eingeführt werden, die den vorab festgestellten Abweichungen entsprechen. Es können die Abweichungen für die einzelnen Bauelemente, für mehrere Bauelemente gemeinsam oder für alle Bauelemente von den Bildaufnahme- bis zu den Bilddarstellungselementen festgestellt und an jedem Bauelement für sich oder gemeinsam für alle an einem Bauelement korrigiert werden.

Mit diesem Verfahren ist es möglich, Verzerrungen der Abbildungen, die z. B. auf dem optischen Teil der Aufnahmegeräte beruhen, auszugleichen. Derartige Verzerrungen könnnen durch Nichtlinearitäten in der Optik, durch schräge Einfallswinkel oder durch lineare und nicht-lineare geometrische Transformationen innerhalb des bildgebenden Systems verursacht werden. Nicht-lineare Bauelemente sind z. B. in einer oder beiden Kameras vorhanden.

Mit dem Verfahren können weiterhin Differenzen, die bei den von den beiden Kameras erzeugten Abbildungen auftreten, ausgeglichen werden. Es ist möglich, lineare und nicht-lineare Differenzen und auch Fehler, z. B. Spiegelverkehrtheit der beiden Kanäle, Größendifferenzen, Verdrehungen der beiden Bildkoordinaten zueinander und Pyramidenfehler zwischen den beiden Abbildungen zu beseitigen.

Durch die oben beschriebenen Maßnahmen zur Bildmanipulation läßt sich der Aufwand bei der Herstellung von Optiken für die Kameras verhindern, d. h. es können gute Ablichtungen auch mit weniger hochwertigen Optiken erzeugt werden. Dies ist insbesondere bei Anwendungen im dreidimensionalen Bereich von großem Vorteil. Die Beeinflussung der Bildsignale, um Verzerrungen und Unterschiede zu beseitigen, kann auf verschiedene Weise erfolgen. Eine Korrektur kann in wenigstens einer Kamera in der Ausleselogik oder beim Weiterverarbeiten im Bildspeicher oder am bildgebenden Teil wie Monitor, Bildschirm, z. B. Flachbildschirm, am bildgebenden, brillenähnlichen Projektor oder an Projektoren erfolgen. Das Verfahren kann auch bei monoskopischen Darstellungen bzw. Darstellungssystemen mit Vorteil verwendet werden.

Für die Durchführung der vorstehend beschriebenen Verfahren gibt es folgende bevorzugte Vorrichtungen, die je zwei Kameras, einen Monitor, Verarbeitungseinheiten und jeweils zwei, den Augen eines Betrachters zugeordnete Blenden aufweisen. Bei einer Vorrichtung sind zwei Kameras je an einen Video-Bildspeicher angeschlossen. Diese Video-Bildspeicher sind mit einer Echtzeitbildverarbeitung verbunden, der ein weiterer Video-Bildspeicher nachgeschaltet ist, an den der Monitor angeschlossen ist. Die Echtzeitbildverarbeitung steuert die Verschiebung der von den Kameras erzeugten Bilder auf dem Monitor bzw. Bildschirm und die dem Auge eines Beobachters zugeordneten Blenden. Die Bilder der beiden Kameras werden in den Bildschirmspeichern digitalisiert. Mit Hilfe dieser Bildinformationen generiert die Echtzeitbildverarbeitung den Ausgangsbildschirmspeicher, dessen Inhalt am Monitor bzw. Bildschirm dargestellt wird. Diese Anordnung ist aufgrund der Variabilität der Echtzeitbildverarbeitung sehr flexibel. Es können die Verschiebung der Bilder gegeneinander, eine Umrechnung der Bildinformation zur Kompensierung des Blickwinkelfehlers oder viel weitergehende Bildmanipulationen realisiert werden.

Diese Anordnung ist auch frei in der Wahl der Bildsignale in Bezug auf Wiederholfrequenz, Zeilensprungverfahren usw. und in der Wahl zwischen Voll- und Halbbildverfahren.

Bei einer anderen zweckmäßigen Vorrichtung sind zwei Kameras über einen von einer Umschaltsteuerung betätigbaren Umschalter mit dem Monitor bzw. Bildschirm verbunden. Eine Horizontal-Endstufe des Monitors bzw. Bildschirms ist an einen von der Umschaltsteuerung betätigbaren Umschalter angeschlossen, dem zwei je für die Verschiebung der von den Kameras stammenden Bilder auf dem Monitor bzw. Bildschirm vorgesehene Offset-Steuerungen vorgeschaltet sind. Die Umschaltsteuerung betätigt auch die Blenden, die den Augen eines Beobachters zugeordnet sind. Der Takt für die Umschaltsteuerung wird vorzugsweise vom Synchronsignal der Kameras, am Eingangssignal des Monitors oder an einem anderen Punkt vom Bildsignal abgegriffen.

Bei einer anderen günstigen Vorrichtung sind zwei Kameras über einen von einer Umschaltsteuerung betätigbaren Umschalter an einem Video-Bildspeicher angeschlossen, dem ein Monitor nachgeschaltet ist. Die Einspeicherung der Bilder in den Video-Bildspeicher wird von einer Adresseneinstelleinrichtung gesteuert, die Adressensignale aus Datenzeigern und Offset-Signalen bildet, die über einen von der Umschaltsteuerung betätigbaren Umschalter von zwei digitalen Offset-Steuerungen erzeugt werden. Die Umschaltsteuerung betätigt auch die dem Auge eines Betrachters zugeordneten Blenden. Der Takt für die Umschaltsteuerung wird vom Synchronsignal der Kameras, am Eingangssignal des Monitors oder an einem anderen Punkt vom Bildsignal abgenommen.

An mindestens einer Kamera kann ein Sensor zur Erzeugung eines dem Abstand zwischen einer festen Konvergenzebene der optischen Achsen der Kameras und einem Einstellpunkt des Objektivs proportionalen Signals vorgesehen sein, das zu einem die horizontalen Ablenkungen der Bilder der beiden Kameras steuernden Signal aufbereitet wird. Das abstandsabhängige Signal wird bei dieser Anordnung während der Scharfeinstellung der einen Kamera automatisch erzeugt und anschließend für die Versetzung der rechten oder linken Kamerabilder ausgenutzt. Ein entsprechender Sensor kann auch am Objektiv der zweiten Kamera vorgesehen sein. Unter der Voraussetzung, daß beide Kameras gleich eingestellt werden, reicht aber ein Sensor aus.

Eine Vorrichtung zur Durchführung des in dem Anspruch 8 beschriebenen Verfahrens besteht erfindungsgemäß darin, daß eine Vergleichseinrichtung für die mit den Kameras, den Verarbeitungseinheiten und dem Monitor bzw. dem Bildschirm erzeugten Abbildungen und geometrisch fehlerfreien Abbildungen vorgesehen ist, daß die Vergleichseinheit mit einem Prozessor zur Berechnung von Korrekturwerten verbunden ist und daß die Korrekturwerte in eine Einrichtung für die Veränderung der von den Kameras erzeugten Bildsignale eingebbar sind. Es wird also z. B. ein Objekt verwendet, für das eine geometrisch einwandfreie Bildvorlage vorhanden ist, die z. B. mit einer hochgenauen Anordnung gewonnen wurde. Anhand einer solchen Vorlage und den von den Kameras erzeugten Abbildungen werden mit einer Bildverarbeitungseinheit die Abweichungen festgestellt und mit einer Korrekturberechnungseinheit Korrekturwerte erzeugt, die in Einrichtungen zur Korrektur der Bildsignale, die von den Kameras stammen, eingegeben werden. Es können z. B. die Korrekturwerte für die einzelnen Bausteine des die Kameras, Verarbeitungseinheiten, Blenden und den Monitor bzw. Bildschirm enthaltenden Systems für sich bestimmt werden. Es ist dann möglich, Bildaufnahmesysteme aus verschiedenen Bausteinen zusammenzustellen und mittels der Korrekturwerte aneinander anzupassen. Im Normalfall werden die Korrekturwerte für ein Bildaufnahmesystem nur einmal ermittelt und stehen dann für die Entzerrung der dargestellten Bilder zur Verfügung. Eine Nachkalibrierung des Bildaufnahmesystems ist möglich. Die Entzerrung der Bildsignale kann an verschiedenen Stellen im Bildaufnahme- und Bildverarbeitungssystem erfolgen. Insbesondere wird die Korrektur in den Kameras, den Bildverarbeitungseinheiten oder den Monitoren vorgenommen.

Die Erfindung wird nachfolgend anhand von in der Zeichnung dargestellten Ausführungsbeispielen näher beschrieben, aus denen sich weitere Einzelheiten, Merkmale und Vorteile der Erfindung ergeben.

Es zeigen:
- Fig. 1: in schematischer Darstellung eine Vorrichtung zur Wiedergabe dreidimensionaler Bilder,
- Fig. 2a,b: einen Monitor mit zueinander versetzt liegenden Bildern,
- Fig. 3: eine andere Ausführungsform einer Vorrichtung zur Wiedergabe dreidimensionaler Bilder in schematischer Darstellung und
- Fig. 4: eine weitere Ausführungsform einer Vorrichtung zur Wiedergabe dreidimensionaler Bilder in schematischer Darstellung.

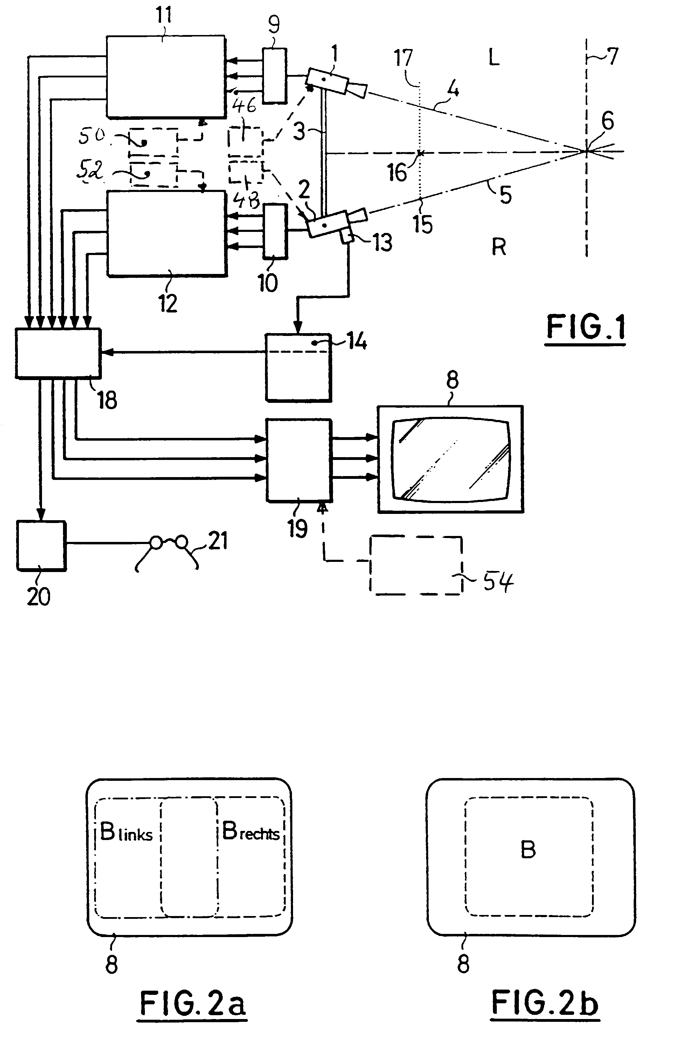

Die in Fig. 1 dargestelle Vorrichtung zur Wiedergabe dreidimensionaler Bilder enthält zwei Aufnahmekanäle, nämlich einen linken Aufnahmekanal L und einen rechten Aufnahmekanal R. Der linke Aufnahmekanal L weist eine Kamera 1 und der rechte Aufnahmekanal R eine Kamera 2 als Bildaufnahmeelemente auf. Beide Kameras 1 und 2 sind auf einem gemeinsamen Träger 3 befestigt. In der Fig. 1 sind die optischen Achsen der Kameras 1 und 2 strichpunktiert dargestellt und mit 4 und 5 bezeichnet. Die optischen Achsen 4 und 5 schneiden sich in einem Punkt 6 einer Konvergenzebene 7, die in Fig. 1 gestrichelt dargestellt ist. Auf diese Konvergenzebene 7 sind beide Kameras 1, 2 fest eingestellt. Wenn sich die Oberfläche eines darzustellenden Objekts in der Konvergenzebene 7 befindet, werden die aufgenommenen Bilder auf einem Monitor 8 bzw. Bildschirm als Bilddarstellungselement nacheinander an der gleichen Stelle scharf abgebildet.

Die Kameras 1, 2 sind herkömmliche Vidicons oder CCD-Kameras und ausgangsseitig je mit RGB-Modulen 9, 10 verbunden, die farbdekodierte Signale erzeugen. Den RGB-Modulen 9, 10 sind jeweils Verarbeitungseinheiten 11, 12 mit Video-Bildspeichern in Form von RAM-Speichern nachgeschaltet. Es ist auch möglich, entsprechende schwarz-weiß-Kameras zur dreidimensionalen Darstellung zu verwenden. Die Verarbeitungseinheiten 11, 12 mit den Video-Bildspeichern enthalten nicht näher dargestellte Analog/Digital-Umsetzer und RAM-Speicher, in denen die digitalisierten Bildsignale gespeichert werden. Die Kameras 1, 2 werden miteinander synchronisiert.

An der Kamera 2 ist ein Sensor 13 befestigt, der Signale erzeugt, die dem Abstand zwischen der Konvergenzebene 7 und einem Punkt, z.B. 15, auf der optischen Achse 5 proportional sind, auf den die Kamera 2 gerade fokussiert ist. Wenn die Kamera 2 auf den Punkt 6 fokussiert ist, ist das Signal am Ausgang des Sensors 13 null. An der Kamera 1 kann ein entsprechender Sensor angebracht sein. Unter der Voraussetzung daß die Fokussierung beider Kameras 1, 2 gleich eingestellt wird, genügt zur genauen Einstellung der Bilder der Sensor 13, dem eine Auswertanordnung 14 nachgeschaltet ist, in der das Signal bspw. nach einer Digitalisierung in Werte umgesetzt wird, die winkelabhängig sind. Es handelt sich um die Winkel, die von den optischen Achsen der Kameras in einer ersten Stellung, in der sie sich in der festen Konvergenzebene schneiden, und in einer zweiten, gedachten Stellung eingenommen werden, in der sie sich in einer gedachten Konvergenzebene schneiden, die vom Objekt bestimmt wird. Dem Punkt 15 entspricht eine gedachte Konvergenzebene 17, in der sich die gedachten optischen Achsen der beiden Kameras 1, 2 in Punkt 16 schneiden. In dieser gedachten Konvergenzebene 17 befindet sich das abzubildende Objekt, das nicht näher dargestellt ist.

Die gespeicherten Bilder der linken und rechten Aufnahmekanäle L und R gelangen aus den Video-Bildspeichern der Verarbeitungseinheiten 11, 12 jeweils in eine Echtzeitbildverarbeitung 18, die von einer nicht dargestellten Takt- und Synchronisierschaltung gesteuert wird. Die Echtzeitbildverarbeitung 18 läßt wechselweise die Bilder der Verarbeitungseinheiten 11, 12 zu einem Video-Bildspeicher 19 durch, dem der Monitor 8 nachgeschaltet ist. Die Auswertanordnung 14 ist zusätzlich mit der Echtzeitbildverarbeitung 18 verbunden. An die Echtzeitbildverarbeitung 18 sind weiterhin Blenden 20 für die optische Einstellung mindestens einer Brille 21 angeschlossen. Die oben beschriebene Vorrichtung ist frei in der Wahl der Bildsignale bezüglich Wiederholfrequenz, Zeilensprungverfahren und in der Wahl zwischen Voll- und Halbbildverfahren.

Die von den Verarbeitungseinheiten 11, 12 ausgegebenen Bilder, die z.B. in Form von Halbbildern, wie sie für die Monitordarstellung üblich sind, aber mit doppelter Frequenz zur Verfügung gestellt werden, gelangen wechselweise über die Echtzeitbildverarbeitung 18 zum Video-Bildspeicher 19, von wo sie zum Monitor 8 übertragen werden, auf dem sie dargestellt werden. Die Ablenkung des Monitors 8 wird durch die Auswerteinheit 14 beeinflußt, die abstandsabhängige, bzw. winkelabhängige Signale erzeugt, die eine entsprechende Verschiebung der Bilder des linken und rechten Aufnahmekanals auf dem Monitor 8 hervorrufen.

Die Fig. 2a zeigt den Monitor 8, auf dem für eine Aufnahme in der Konvergenzebene 17 ein linkes Bild Bₗᵢₙₖₛ, das strichpunktiert gezeichnet ist, erzeugt wird, das zur linken Seite des Monitors 8 verschoben ist. Das von der Kamera 2 aufgenommene rechte Bild B_{rechts}, das gestrichelt in Fig. 2a dargestellt ist, ist zur rechten Seite des Monitors 8 verschoben. Das vom Betrachter durch die Brille 21 sichtbare räumliche Bild B befindet sich, wie in Fig. 2b dargestellt, in der Mitte des Monitors 8. Die oben beschriebene Vorrichtung ist aufgrund der Variabilität der Echtzeitbildverarbeitung sehr flexibel. Es können die Bilder gegeneinander verschoben werden. Die Bildinformation kann zur Kompensierung des Blickwinkels umgerechnet werden. Weitergehende Bildmanipulationen sind möglich.

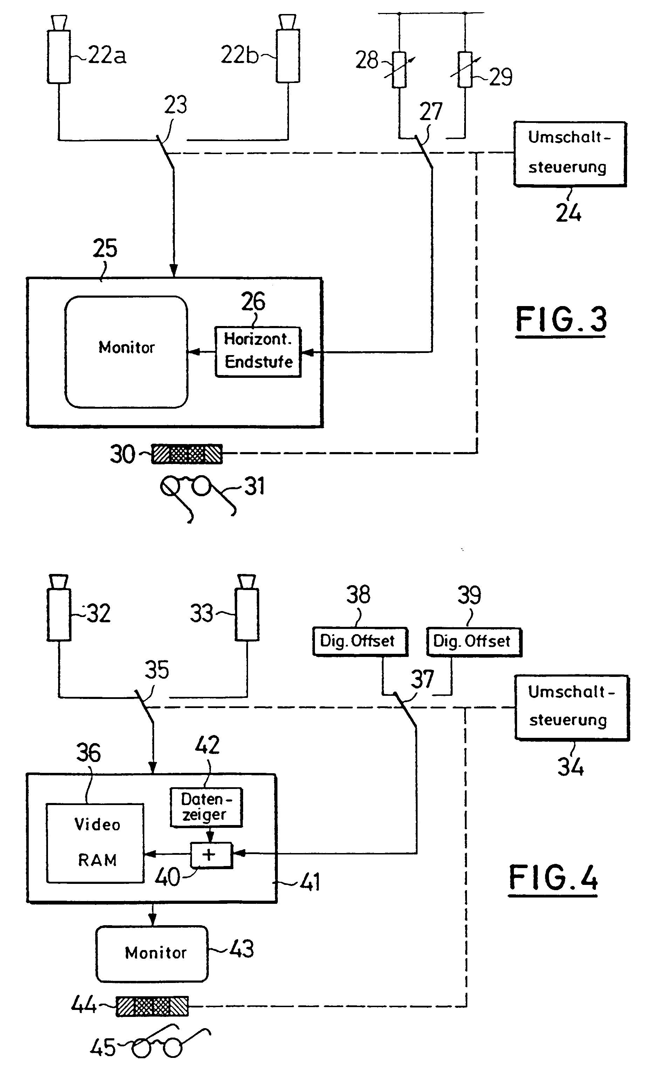

Fig. 3 zeigt eine andere Ausführungsform einer Vorrichtung zur Wiedergabe dreidimensionaler Bilder. Zwei Kameras 22a, 22b mit nachgeschalteten, nicht näher dargestellten RGB-Modulen sind mit einem Umschalter 23 verbunden, der von einer Umschaltsteuerung 24 betätigt wird. Dem Umschalter 23 ist ein Monitor 25 nachgeschaltet, der eine horizontale Endstufe 26 hat, die von außen gesteuert wird. Die Endstufe 26 ist mit einem Umschaltkontakt 27 verbunden, der über zwei nicht näher bezeichnete Anschlüsse je mit einem Potentiometer 28, 29 oder einem Trimmer verbunden ist. Die Potentiometer 28, 29 sind an eine nicht näher bezeichnete Betriebsspannungsquelle angeschlossen. Die Umschaltungssteuerung 24 betätigt beide Umschalter 23, 27 gleichzeitig sowie die optischen Blenden 30 einer Brille 31.

Die beiden Potentiometer 28, 29, an deren Stelle auch Offset-Regler vorgesehen sein können, beeinflussen den zeitlichen Offset der auf dem Monitor dargestellten Bilder. Über die Einstellung der Potentiometer 28, 29 erfolgt die Anpassung der Bildverschiebung an den Punkt, auf den beide Kameras 21, 22 fokussiert sind. Die Potentiometer können durch andere Offset-Steuerungen ersetzt werden.

Die Bilder der beiden synchronisierten Kameras 22a, 22b werden über den Umschalter 23 wechselseitig zum Monitor 25 geleitet. Synchron zum Wechsel der Bildumschaltung gelangt über Umschalter 27 das jeweilige Offset zur Horizontalendstufe, so daß bei Darstellung von Bild 1 auch Offset 1 die Horizontalverschiebung bewirkt und umgekehrt.

Der Takt für die Umschaltsteuerung 24 kann am Synchronsignal der Kameras 22a, 22b, am Eingangssignal des Monitor 25 oder an einem anderen Punkt vom Bildsignal abgenommen werden.

Dieses System ist sowohl mit als auch ohne Zeilensprungverfahren bzw. als Voll- und Halbbildverfahren anwendbar.

Um Flimmerfreiheit zu erreichen, können verschiedene Verfahren verwendet werden. So ist z.B. die Verwendung von Kameras mit einer höheren Bildwechselfrequenz möglich. Ein anderes Verfahren wäre die Umsetzung der Kamerasignale von z.B. 50 Hz auf 100 Hz. Zu beachten ist dabei, daß der Takt für die Umschaltung der Horizontaloffsets vom Ausgangssignal des Umsetzers gewonnen wird.

Fig. 4 zeigt eine Vorrichtung zur Wiedergabe dreidimensionaler Bilder, bei der die Bilder mittels digitaler Zwischenspeicherung verschoben werden. Es sind gemäß Fig. 4 zwei Kameras 32, 33 über einen von einer Umschaltsteuerung 34 betätigbaren Umschalter 35 an eine Anordnung 41 mit einem Video-Speicher 36 angeschlossen. Zwei digitale Offset-Steuerungen 38, 39 je für eine Kamera 32, 33 sind über einen von der Umschaltsteuerung 34 betätigbaren Umschalter 37 mit einer Adresseneinstelleinrichtung 40 in der Anordnung 41 verbunden. Die Adresseneinstelleinrichtung 40 wird weiterhin von einem Datenzeiger 42 gesteuert. Der Anordnung 41 ist ein Monitor 43 nachgeschaltet. Die Umschaltsteuerung 34 betätigt auch optische Blenden 44 einer Brille 45.

Die Offset-Steuerungen 38, 39 werden von Hand oder durch eine intelligente Steuerung auf den Fokusabstand der Kameras 32, 33 eingestellt.

Die Bilder der beiden synchronisierten Kameras 32, 33 werden über den Umschalter 35 wechselseitig zum Bildschirmspeicher 36 geleitet. Synchron zum Wechsel der Bildumschaltung 9 gelangt über Umschalter 37 das jeweilige Offset ebenfalls zum Bildschirmspeicher 36, so daß ein versetztes Ein oder Auslesen der Bildinformation kamerabezogen ermöglicht wird.

Der Takt für die Umschaltsteuerung kann insbesondere am Synchronsignal der Kameras 32, 33 am Eingangssignal des Monitors oder an einem anderen Punkt vom Bildsignal abgenommen werden.

Auch dieses System ist sowohl mit als auch ohne Zeilensprungverfahren anwendbar. Will man statt Halbbild- Vollbildverfahren verwenden, sind zwei getrennte Bildschirmspeicher notwendig.

Um Flimmerfreiheit zu erreichen, können, wie in dem zuvor beschriebenen Ausführungsbeispiel verschiedene Verfahren verwendet werden. So ist die Verwendung von Kameras mit einer höheren Bildwechselfrequenz möglich. Ein anderes Verfahren wäre die Umsetzung der Kamerasignale von z.B. 50 Hz auf 100 Hz, wobei zu beachten ist, daß der Takt für die Umschaltung der digitalen Offsets vom Ausgangssignal des Umsetzers gewonnen werden muß.

Optische Systeme, wie sie in den Kameras 1 und 2 verwendet werden, haben häufig Bauelemente, die die Objekte nicht verzerrungsfrei abbilden. Verzerrungen können auch durch die den Kameras 1, 2 nachgeschalteten Bestandteile der in den Fig. 1, 3 und 4 dargestellten Bildaufnahmesysteme bzw. Bildverarbeitungssysteme hervorgerufen werden. Verzerrungen können z.B. durch Nichtlinearitäten der Optik, schräge Einfallswinkel, lineare und nicht-lineare geometrische Transformationen innerhalb der Bildaufnahmeeinheit verursacht werden. Vielfach treten Nichtlinearitäten aufgrund der Bausteine der Kameras auf. Diese Verzerrungen lassen sich durch Manipulation der von den Kameras gelieferten Bildsignale mittels Korrekturwerten beseitigen. Die auf dem optischen Weg bis zum Aufnahmeteil der jeweiligen Kamera entstehenden Verzerrungen werden im Rahmen einer Echtzeitbildverarbeitung beseitigt.

Zunächst werden die Abweichungen der mit dem Bildverarbeitungssystem erzeugten Abbildungen der Objekte von einer genauen Abbildung der Objekte festgestellt. Es ist dazu eine Bildvorlage notwendig, deren Geometrie bekannt ist. Eine solche Bildvorlage kann auch mit einem genaueren bzw. höherwertigen Aufnahme- und Abbildungssystem erzeugt werden. Diese Bildvorlage wird mit den jeweils von den Kameras erzeugten Abbildungen verglichen. Hierzu wird eine nicht näher dargestellte Bildverarbeitungseinheit verwendet, die die Abweichungen erfaßt. Die festgestellten Abweichungen werden in einer Korrekturberechnungseinheit zu Korrekturwerten verarbeitet, mit denen die von den Kameras jeweils erzeugten Bildsignale korrigiert werden. Das korrigierte Bild wird auf dem Monitor bzw. Bildschirm dargestellt. Es enthält nicht mehr die auf Abbildungsfehlern der Optik und anderen Einflüssen beruhenden Verzerrungen. Durch diese Art der Bildmanipulation ist es möglich, den Aufwand bei der Herstellung der Optiken zu vermindern. Es ist nicht mehr notwendig, Abbildungsfehler durch höherwertige Optiken zu vermindern. Bei Anwendungen der Kameras für die dreidimensionale Abbildung von Objekten ist diese Möglichkeit der Korrektur von besonderem Vorteil.

Aufgrund von Toleranzen der Bauteile in den die beiden Kameras enthaltenden Aufnahmekanälen kann es vorkommen, daß die beiden, je mit einer Kamera aufgenommenen Abbildungen gewisse Unterschiede aufweisen. Die Unterschiede können auf linearen oder nicht-linearen Einflüssen beruhen, die z.B. auf dem optischen Weg oder bei der Adaption zwischen Optik und Bildaufnahmeeinheit auftreten. Solche Fehler, aber auch Fehler wie Spiegelverkehrtheit der beiden Kanäle, Größendifferenzen, Verdrehungen der Bildkoordinaten zueinander und Pyramidenfehler, können mit dem nachstehend beschriebenen Verfahren ausgeglichen werden.

Zuerst müssen die Unterschiede in den Abbildungen, die von den die beiden Kameras 1, 2 enthaltenden Kanälen erzeugt werden, festgestellt werden. Hierfür wird die oben bereits erwähnte Bildverarbeitungseinheit benutzt. Aus den Abweichungen werden mit der oben ebenfalls bereits erwähnten Korrekturberechnungseinheit Korrekturdaten bestimmt, mit denen wenigstens eine der beiden Abbildungen korrigiert wird, d.h. die Bildsignale werden vor der Darstellung auf dem Monitor bzw. Bildschirm anhand der Korrekturwerte so beeinflußt, daß die beiden, jedem rechten und linken Auge dargebotenen Abbildungen hinsichtlich der Kompensation des optischen Fehlers gleich sind. Damit läßt sich ein unverfälschter dreidimensionaler Eindruck hervorrufen.

Im Normalfall werden die Korrekturwerte nur einmal festgestellt. Die Korrekturdaten stehen dann für die weitere Verarbeitung zur Verfügung. Wenn die Korrekturwerte für die verschiedenen Bestandteile des Bildaufnahmesystems bzw. Bildverarbeitungssystems getrennt voneinander festgestellt werden, ist es leicht möglich, Einheiten zu einem Bildaufnahme- oder Bildverarbeitungssystem zusammenzustellen bzw. aneinander anzupassen.

Die Einfügung der Korrekturwerte für die Manipulation der Darstellungen kann an verschiedenen Stellen des Bildaufnahme- bzw. Bildverarbeitungssystems erfolgen. Verschiedene Möglichkeiten für die Korrektur sind in der Fig. 1 dargestellt.

Die Korrektur kann direkt in den Kameras 1, 2 in deren Ausleselogiken erfolgen. Dies ist in Fig. 1 durch die beiden strichpunktiert gezeichneten Korrektureinheiten 46, 48 dargestellt. Die Korrektureinheiten 46, 48 befinden sich, obwohl außerhalb gezeichnet, innerhalb der Kameras 1, 2 und sind Bestandteile der Ausleselogiken. Mit den Korrektureinheiten 46, 48 werden die Bildsignale so beeinflußt, daß Verzerrungen und Unterschiede der beiden Aufnahmesysteme ausgeglichen werden.

Alternativ zu den Korrekturen der Bildsignale in den Kameras 1, 2 ist es möglich, in den Verarbeitungseinheiten 11, 12 mit den Videobildspeichern die gespeicherten digitalisierten Bildsignale gemäß den Korrekturwerten zu verändern. Die Korrekturwerte sind hierfür in Korrekturwertspeichern 50, 52 in digitaler Form enthalten, aus denen die Verarbeitungseinheiten 11, 12 die Korrekturwerte abrufen.

Eine weitere Möglichkeit zur Bildmanipulation auf der Grundlage der Korrekturwerte besteht darin, die im Video-Bildspeicher 19 enthaltenen Bilddaten zu ändern. Hierzu ist eine Korrekturwertverarbeitungseinrichtung 54 vorgesehen, die mit dem Video-Bildspeicher 19 verbunden ist und z.B. neben einem Korrekturwertspeicher eine Verarbeitungseinheit enthält, die mit dem Video-Bildspeicher 19 zusammenarbeitet. Die Korrektur findet in diesem Fall am bildgebenden Teil, d.h. dem Monitor bzw. Bildschirm, wie Flachbildschirm, statt. Anstelle eines Monitors oder Bildschirms können auch bildgebende, brillenähnliche Projektoren oder Projektoren verwendet werden, an denen mittels der Korrekturwerte die Abbildungen manipuliert werden. Die Korrektur kann in der Echtzeitbildverarbeitung durchgeführt werden.

Anstelle der beiden oben angegebenen Kameras können auch andere Bildaufnahmeelemente vorgesehen werden. Als Bildsensor ist z.B. eine einzige Kamera mit zwei Optiken möglich, die einen Bildsensor enthält, der mittels einer mechanischen oder optischen Blende für die Strahlen der ersten oder zweiten Optik freigegeben wird. Die Optiken sind auf eine vorgebbare Konvergenzebene eingestellt. Eine andere Möglichkeit besteht darin, die beiden unterschiedlichen Bildinformationen mit einer Kamera zu erzeugen, die einen Bildsensor mit zwei je einer Optik zugeordneten Hälften aufweist. Die beiden Hälften des Sensors werden abwechselnd für die Weiterleitung von Signalen freigegeben. Die Optiken sind auf eine vorgegebene Konvergenzebene fokussiert. Möglich ist auch, eine Optik vorzusehen, die abwechselnd ihren Strahlengang ändert und damit zeitlich nacheinander zwei optische Achsen hat, die sich in einer Konvergenzebene schneiden.

Weiterhin ist es günstig, Lichtleitfasern oder andere optische Leiter in Verbindung mit Bildsensoren und ggf. Licht zum Objekt aussendenden Lichtleitfasern vorzusehen, um Objekte an schwer zugänglichen Stellen mit Hilfe dreidimensionaler Darstellungen zu überwachen.

Anwendungsgebiete für die oben beschriebenen Vorrichtungen sind insbesondere Endoskope, Sensoren für Roboter, Sensoren für Herstellungsprozesse, z.B. in explosionsgefährdeten Räumen.

Die Korrekturdaten zur Beseitigung von Fehlern des optischen oder elektrischen Systems oder einzelner Komponenten des Systems können dadurch erhalten werden, daß ein definiertes Signal in das System eingegeben wird, das mit einem gewünschten Ausgangssignal verglichen wird. Aus den Abweichungen lassen sich Korrekturdaten ermitteln. Als Eingangssignal kann eine optische Vorlage dienen, die mit dem durch das System erzeugten Bild verglichen wird. Durch geometrische Vermessung des erzeugten Bildes und Vergleich mit der Vorlage können ebenfalls Korrekturdaten gewonnen werden.

Die oben erwähnte Echtzeitbildverarbeitung 18 setzt sich insbesondere aus einem Prozessor und Bildspeichern für die aus verschiedenen Aufnahmepositionen gewonnenen Bildinformationen, einem Programmspeicher und einem Bildspeicher für die Aufnahme der zueinander verschobenen Bildinformationen zusammen. Der Prozessor führt die gewünschten Verschiebungen, Drehungen, Farbkorrekturen, Spiegelungen, Verzerrungen und Bildtransformationen durch.

Neben der oben beschriebenen horizontalen Verschiebung jeweils zweier aus verschiedenen Blickwinkeln aufgenommenen Bildinformationen eines oder mehrerer Objekte ist auch eine vertikale Verschiebung von zwei einander zugeordneten Bildinformationen und eine entsprechende Darstellung möglich.

Bei der in Fig. 3 dargestellten Vorrichtung läßt sich über eine Beeinflussung der Monitor-Endstufe und bei der Vorrichtung gemäß Fig. 4 über eine Beeinflussung des Datenzeigers 42 des Bildspeichers 36 eine vertikale Verschiebung jeweils zweier zugeordneter Bildinformationen erreichen. Hierzu können ein weiteres Paar von Offset-Steuerungen vorgesehen werden, die bei Abgabe analoger Signale die nicht dargestellte Vertikal-Endstufe am Monitor der Vorrichtung gemäß Fig. 3 und bei Abgabe digitaler Werte den Bildspeicherzeiger des Bildspeichers gemäß Fig. 4 die Verschiebung bewirken. Verwendet man statt Potentiometern oder anderen über das ganze Bild konstanten Offset gehenden Einheiten eine Offset-Steuereinheit, die innerhalb jeder Zeile bzw. über den Verlauf des ganzen Bilds hinweg eine Rampe oder einen ähnlichen Offset-Verlauf erzeugt, so erhält man eine Möglichkeit ohne Bildverarbeitung zur Drehung des Bildes.

## Patentansprüche

1. Verfahren zur Aufnahme und Wiedergabe dreidimensionaler Bilder mit zwei Kameras, die auf eines oder mehrere abzubildende Objekte fokussiert werden, mit einem Monitor, mit Verarbeitungseinheiten für von den Kameras erzeugte Bildsignale und mit jeweils zwei, den Augen eines Betrachters zugeordneten, wechselweise betätigten Blenden, **dadurch gekennzeichnet**, daß die beiden Kameras (1, 2) mit ihren optischen Achsen (4, 5) fest auf eine Konvergenzebene (7) eingestellt sind, in der sich ihre optischen Achsen (4, 5) in einem Punkt (6) schneiden, daß bei der Fokussierung der beiden Kameras (1, 2) auf das oder die Objekte in einer Beobachtungsebene, die einen Abstand von der Konvergenzebene (7) hat, die von den beiden Kameras erzeugten Bildinformationen in horizontaler Richtung auf dem Monitor (8) in einem Ausmaß versetzt zueinander dargestellt werden, das vom Abstand der Konvergenzebene von der Beobachtungsebene bestimmt wird.

2. Verfahren nach Anspruch 1, **dadurch gekennzeichnet,** daß bei einer ausgewählten Beobachtungsebene, die näher an den Kameras (1, 2) liegt als die Konvergenzebene (7), die von den Kameras (1, 2) erzeugten Bildinformationen nebeneinander entsprechend der rechten oder linken Lage der Kameras (1, 2) in bezug auf das oder die Objekte dargestellt werden und daß bei einer Beobachtungsebene, die weiter von den Kameras (1, 2) entfernt ist als die Konvergenzebene, die Lage der dargestellten Bildinformationen der rechten oder linken Lage der Kameras (1, 2) vertauscht ist.

3. Verfahren nach Ansprüchen 1 oder 2, **dadurch gekennzeichnet**, daß das Ausmaß der Versetzung von einem ersten Winkel, der von den optischen Achsen (4, 5) der Kameras (1, 2) in der auf die Konvergenzebene (7) eingestellten Position eingenommen wird, und von einem weiteren Winkel abhängt, der von den optischen Achsen bei Fokussierung auf eine gegen die Konvergenzebene verschobene Beobachtungsebene eingenommen wurde.

4. Verfahren nach einem oder mehreren der Ansprüche 1 bis 3, **dadurch gekennzeichnet,** daß Signale erzeugt werden, die das Ausmaß der gegenseitigen Versetzung der Bilder bestimmen und die die Lage der Bilder auf dem Monitor (8) bzw. Bildschirm steuern.

5. Verfahren nach einem oder mehreren der Ansprüche 1 bis 4, **dadurch gekennzeichnet**, daß die Bildinformationen der beiden Kameras (1, 2) digitalisiert und in einen Bildspeicher eingegeben werden, in dem die Bilder der beiden Kameras (1, 2) entsprechend der vorgesehenen Versetzung abgespeichert werden, bevor der Bildspeicher für die Darstellung seines Inhaltes auf dem Monitor (8) bzw. Bildschirm ausgelesen wird.

6. Verfahren nach einem oder mehreren der Ansprüche 1 bis 4, **dadurch gekennzeichnet**, daß die Bildinformationen aus den beiden Kameras (1, 2) nach der Digitalisierung mittels Echtzeitbildverarbeitung entsprechend der Versetzung verarbeitet und danach auf dem Monitor (8) bzw. Bildschirm dargestellt werden.

7. Verfahren nach einem oder mehreren der vorhergehenden Ansprüche, **dadurch gekennzeichnet**, daß die von den Kameras (1, 2) erzeugten Bildinformationen vor der Versetzung je durch affine Abbildungen korrigiert werden.

8. Verfahren, nach einem oder mehreren der vorhergehenden Ansprüche, **dadurch gekennzeichnet**, daß die Abweichungen der Abbildungen des Objekts oder der Objekte von einer exakten Abbildung von wenigstens einem Abweichungen erzeugenden Bauelement in der von dem Kameras zu den Bilddarstellungselementen verlaufenden Systemkette vorab festgestellt werden und daß bei wenigstens einem Bauelement in der Systemkette Korrekturwerte eingeführt werden, die den vorab festgestellten Abweichungen entsprechen.

9. Verfahren nach Anspruch 7 oder 8, **dadurch gekennzeichnet**, daß die Korrekturwerte in wenigstens einer von zwei Kameras in der Ausleselogik hinzugefügt werden.

10. Verfahren nach Anspruch 7 oder 8, **dadurch gekennzeichnet**, daß die von den beiden Kameras erzeugten Bildsignale nach der Digitalisierung und Eingabe in den Bildschirmspeicher nach Maßgabe der Korrekturwerte verändert werden.

11. Verfahren nach Anspruch 7 oder 8, **dadurch gekennzeichnet**, daß die dem Monitor bzw. Bildschirm zugeführten Bildsignale nach Maßgabe der Korrekturwerte verändert werden.

12. Verfahren nach einem oder mehreren der vorhergehenden Ansprüche, **dadurch gekennzeichnet,** daß jeweils zwei Bildinformationen, die aus unterschiedlichen Aufnahmepositionen eines oder mehrerer Objekte mit einer vorgegebenen Konvergenzebene gewonnen werden, in vertikaler Richtung versetzt zueinander dargestellt werden.

13. Vorrichtung zur Aufnahme und Wiedergabe dreidimensionaler Bilder mit zwei Kameras, die auf eines oder mehrere abzubildende Objekte fokussiert werden und an die je ein Video-Bildspeicher angeschlossen ist, mit einem Monitor bzw. Bildschirm und mit jeweils zwei, den Augen eines Betrachters zugeordneten, wechselweise betätigten Blenden, **dadurch gekennzeichnet**, daß die beiden Kameras (1, 2) mit ihren optischen Achsen (4, 5) fest auf eine Konvergenzebene (7) eingestellt sind, in der sich ihre optischen Achsen (4, 5) in einem Punkt (6) schneiden, daß bei der Fokussierung der beiden Kameras (1, 2) auf das oder die Objekte in einer Beobachtungsebene, die einen Abstand von der Konvergenzebene (7) hat, die von den beiden Kameras erzeugten Bilder, mittels einer den Video-Bildspeicher ausgangsseitig angeschlossenen Echtzeitbildverarbeitung (18), der ein weiterer Video-Bildspeicher (19) nachgeschaltet ist, an den der Monitor (8) bzw. Bildschirm angeschlossen ist, und die die Blenden steuert und eine Verschiebung der von den Kameras (1, 2) erzeugten und in den Video-Bildspeichern enthaltenen Bilder durchführt, in horizontaler Richtung auf dem Monitor (8) in einem Ausmaß versetzt zueinander dargestellt werden, das vom Abstand der Konvergenzebene von der Beobachtungsebene bestimmt wird.

14. Vorrichtung zur Aufnahme und Wiedergabe dreidimensionaler Bilder mit zwei Kameras, die auf eines oder mehrere abzubildende Objekte fokussiert werden und an die ein von einer Umschaltsteuerung betätigter umschalter angeschlossen ist, mit einem Monitor und mit jeweils zwei, den Augen eines Betrachters zugeordneten, wechselweise betätigten Blenden, **dadurch gekennzeichnet**, daß die beiden Kameras (1, 2) mit ihren optischen Achsen (4, 5) fest auf eine Konvergenzebene (7) eingestellt sind, in der sich ihre optischen Achsen (4, 5) in einem Punkt (6) schneiden, daß bei der Fokussierung der beiden Kameras (1, 2) auf das oder die Objekte in einer Beobachtungsebene, die einen Abstand von der Konvergenzebene (7) hat, die von den beiden Kameras erzeugten Bilder in horizontaler Richtung auf dem Monitor (8) in einem Ausmaß versetzt zueinander dargestellt werden, das vom Abstand der Konvergenzebene von der Beobachtungsebene bestimmt wird, daß die zwei Kameras (22a, 22b) über den Umschalter (23) mit dem Monitor (25) verbindbar sind, der eine Horizontal-Endstufe (26) aufweist, die an einen von der Umschaltsteuerung (24) betätigbaren Umschalter (27) angeschlossen ist, dem zwei, je für die horizontale Verschiebung der von den Kameras (22a, 22b) erzeugten Bilder vorgesehene Offset-Steuerungen vorgeschaltet sind, die entsprechend der Verschiebung der Bilder der beiden Kameras (22a, 22b) eingestellt werden, und daß die Umschaltsteuerung (24) die Blenden (30) steuert.

15. Vorrichtung zur Aufnahme und Wiedergabe dreidimensionaler Bilder mit zwei Kameras, die auf eines oder mehrere abzubildende Objekte fokussiert werden und an die ein von einer Umschaltsteuerung betätiger umschalter angeschlossen ist, mit einem Monitor, mit Verarbeitungseinheiten für von den Kameras erzeugte Bildsignale und mit jeweils zwei, den Augen eines Betrachters zugeordneten, wechselweise betätigten Blenden, **dadurch gekennzeichnet**, daß die beiden Kameras (1, 2) mit ihren optischen Achsen (4, 5) fest auf eine Konvergenzebene (7) eingestellt sind, in der sich ihre optischen Achsen (4, 5) in einem Punkt (6) schneiden, daß bei der Fokussierung der beiden Kameras (1, 2) auf das oder die Objekte in einer Beobachtungsebene, die einen Abstand von der Konvergenzebene (7) hat, die von den beiden Kameras erzeugten Bilder in horizontaler Richtung auf dem Monitor (8) in einem Ausmaß versetzt zueinander dargestellt werden, das vom Abstand der Konvergenzebene von der Beobachtungsebene bestimmt wird daß die zwei Kameras (32, 33) über den Umschalter (35) an einem Video-Bildspeicher (36) angeschlossen sind, dem der Monitor (43) nachgeschaltet ist, daß Adressen für den Video-Bildspeicher mit einer Adresseneinstelleinrichtung aus Datenzeigern und Offset-Signalen von zwei Offset-Steuerungen gebildet werden, die entsprechend der Verschiebung der Bilder der Kameras (32, 33) eingestellt werden, und daß die Umschaltsteuerung (34) die Blenden (44) betätigt.

16. Vorrichtung nach einem der Ansprüche 13 bis 15, **dadurch gekennzeichnet**, daß an mindestens einer Kamera (2) ein Sensor (13) zur Erzeugung eines dem Abstand zwischen einer festen Konvergenzebene (7) der optischen Achsen (4, 5) der Kameras (1, 2) und einem dem Einstellpunkt (15) des Objektivs proportionalen Signals vorgesehen ist, aus dem Einstellwerte für die horizontalen Ablenkungen der Bilder der beiden Kameras (1, 2) gewonnen werden.

17. Vorrichtung nach Anspruch 13 zur Durchführung des Verfahrens nach Anspruch 8, **dadurch gekennzeichnet**, daß eine Vergleichseinrichtung für die mit den Kameras (1, 2), den Video-Bildspeichern und dem Monitor bzw. dem Bildschirm erzeugten Abbildungen und für geometrisch fehlerfreie Abbildungen vorgesehen ist, daß die Vergleichseinheit mit einer Korrekturwertberechnungseinheit zur Berechnung von Korrekturwerten verbunden ist und daß die Korrekturwerte in eine Einrichtung für die Veränderung der von den Kameras (1, 2) erzeugten Bildsignale eingebbar sind.

18. Vorrichtung nach Anspruch 17, **dadurch gekennzeichnet**, daß die Ausleselogiken der Kameras (1, 2) je eine Korrektureinheit (46, 48) für die Beeinflussung der von den Kameras erzeugten Bildsignale aufweisen.

19. Vorrichtung nach Anspruch 17, **dadurch gekennzeichnet**, daß die den Kameras (1, 2) nachgeschalteten Verarbeitungseinheiten (11, 12) mit den Video-Bildspeichern je mit einem Korrekturwertspeicher (50, 52) verbunden sind, der Korrekturwerte für die Beseitigung von Bildverzerrungen und/oder Unterschieden der beiden Abbildungen enthält.

20. Vorrichtung nach Anspruch 17, **dadurch gekennzeichnet**, daß der dem Monitor (8) oder Bildschirm vorgeschaltete Video-Bildspeicher (19) mit einer Korrekturwertverarbeitungseinheit (54) verbunden ist, mit der Bildverzerrungen und/oder Unterschiede der beiden Abbildungen beseitigbar sind.

21. Vorrichtung nach Anspruch 14, **dadurch gekennzeichnet**, daß zwei weitere Offset-Steuerungen vorgesehen sind, die über einen Umschalter an eine vertikale Endstufe des Monitors anschaltbar sind.

22. Vorrichtung nach Anspruch 15, **dadurch gekennzeichnet**, daß zwei weitere Offset-Steuerungen vorgesehen sind, deren Werte wechselweise dem Datenzeiger zuführbar sind.

## Claims

1. Process for recording and reproducing three-dimensional pictures comprising two cameras focused on one or more object(s) to be displayed, further comprising a monitor, units for processing video signals generated by the cameras and respectively two shutters that are assigned to the eyes of the viewer and operated alternately, **characterized** in that the two cameras (1, 2) with the optical axes (4, 5) thereof are focused on a preset convergence plane (7), with the said optical axes (4, 5) intersecting at a point (6), that during focusing of the two cameras (1, 2) on the object(s) in an observing plane spaced from the convergence plane (7), the picture data generated by the two cameras are displayed on the monitor (8) offset from one another in the horizontal direction to a degree determined by the distance of the convergence plane from the observing plane.

2. Process according to claim 1, **characterized** in that for a selected observing plane that is closer to the cameras (1, 2) than the convergence plane (7) the picture data generated by the cameras (1, 2) are displayed side-by-side in accordance with the right or left position of the cameras (1, 2) with respect to the object(s), and that for an observing plane that is more remote from the cameras (1, 2) than the convergence plane, the position of the displayed picture data is interchanged with respect to the right or left position of the cameras (1, 2).

3. Process according to claims 1 or 2, **characterized** in that the amount of offset is determined by a first angle which is assumed by the optical axes (4, 5) of the cameras (1, 2) in the position focused on the convergence plane (7), and depends on another angle which was assumed by the optical axes while focusing on an observing plane displaced toward the convergence plane.

4. Process according to one or more of claims 1 to 3, **characterized** in that signals are generated that determine the degree to which the pictures are offset with respect to one another and that control the position of the pictures on the monitor (8) or the video screen.

5. Process according to one or more of claims 1 to 4, **charaterized** in that the picture data generated by the two cameras (1, 2) are digitized and put into a video screen storage where the pictures of both cameras (1, 2) are stored in accordance with the anticipated offset before the video screen storage is read out for the purpose of displaying its contents on the monitor (8) or the video screen.

6. Process according to one or more of claims 1 to 4, **characterized** in that the picture data produced by the two cameras (1, 2), following digitizing, are processed by means of real time image processing in accordance with the offset and then displayed on the monitor (8) or the video screen.

7. Process according to one or more of the preceding claims, **characterized** in that the picture data produced by the cameras (1, 2), prior to offsetting, are respectively corrected by affine mapping.

8. Process according to one of more of the preceding claims, **characterized** in that the divergences of the reproductions of the object(s) from an exact reproduction are determined beforehand by at least one drift-generating component in the system chain running from the cameras to the picture displaying elements, and that with at least one component in the system chain correcting values are introduced that correspond to the divergences determined in advance.

9. Process according to claims 7 or 8, **characterized** in that the correcting values are added in at least one of the two cameras in the read-out logics.

10. Process according to claims 7 or 8, **characterized** in that the video signals generated by the two cameras, following digitizing and input into the video screen storage are modified in proportion to the correcting values.

11. Process according to claims 7 or 8, **characterized** in that the video signals conveyed to the monitor or video screen are modified in proportion to the correcting values.

12. Process according to one or more of the preceding claims, **characterized** in that respectively two picture data obtained from varying recording positions of one or more object(s) with a predetermined convergence plane, are displayed offset with respect to one another in the vertical direction.

13. Device for recording and reproducing three-dimensional pictures, comprising two cameras focused on one or more object(s) to be displayed and connected to each of which is a video screen storage, further comprising a monitor or video screen and respectively two shutters, which are assigned to the eyes of a viewer and operated alternately, **characterized** in that the two cameras (1, 2), with the optical axes (4, 5) thereof, are focused on a preset convergence plane (7), with the said optical axes (4, 5) intersecting at a point (6), that during focusing of the two cameras (1, 2) on the object(s) in an observing plane spaced from the convergence plane (7), the pictures produced by the two cameras are displayed on the monitor (8) by real time image processing (18) offset in the horizontal direction by a degree determined by the space between the convergence plane and the observing plane, wherein the real time image processing (18) is connected on the output side to the video screen storage, which is followed by another video screen storage (19), to which the monitor (8) or the video screen are attached and wherein the processing (18) controls the shutters and performs a displacement of the pictures produced by the cameras (1,2) and stored in the video screen storages.

14. Device for recording and reproducing three-dimensional pictures, comprising two cameras focused on one or more object(s) to be displayed and connected to a change-over switch actuated by a change-over control, further comprising a monitor and respectively two shutters, which are assigned to the eyes of a viewer and operated alternately, **characterized** in that the two cameras (1, 2), with the optical axes (4, 5) thereof, are focused on a preset convergence plane (7), with the said optical axes (4, 5) intersecting at a point (6), that during focusing of the two cameras (1, 2) on the object(s) in an observing plane spaced from the convergence plane (7), the pictures produced by the two cameras are displayed on the monitor (8) offset with respect to one another in the horizontal direction, to a degree determined by the distance of the convergence plane from the observing plane, that the two cameras (22a, 22b), through the change-over switch (23), can be connected to the monitor (25) exhibiting a horizontal output stage (26) coupled to a change-over switch (27) that can be operated by the change-over control (24) and that is preceded by two offset control systems provided for the horizontal displacement of the pictures produced by the cameras (22a, 22b), said offset control systems being adjusted in accordance with the displacement of the pictures of the two cameras (22a, 22b), and that the change-over control (24) controls the shutters (30).

15. Device for recording and reproducing three-dimensional pictures, comprising two cameras focused on one or more object(s) and to which is connected a change-over switch operated by a change-over control, further comprising a monitor, units for processing video signals generated by the cameras, and respectively two shutters, which are assigned to the eyes of the viewer and operated alternately, **characterized** in that the two cameras (1, 2), with the optical axes (4, 5) thereof, are focused on a preset convergence plane (7), with the said optical axes (4, 5) intersecting at a point (6), that during focusing of the two cameras (1, 2) on the object(s) in an observing plane spaced from the convergence plane (7), the pictures produced by the two cameras are displayed on the monitor (8) offset from one another in the horizontal direction, to a degree determined by the distance of the convergence plane from the observing plane, that the two cameras (32, 33) are attached to a video storage (36) via a change-over switch (35), said video storage being followed by the monitor (43), that the addresses for the video storage are formed with an address setting device from the data pointers and offset signals from two offset controls, which are adjusted in accordance with the shift of the pictures of the cameras (32, 33) and that the change-over control (34) operates the shutters (44).

16. Device according to one of claims 13 to 15, **characterized** in that at least one camera (2) has a sensor (13) for generating a signal that is proportional to the distance between a fixed convergence plane (7) of the optical axes (4,5) of the cameras (1,2) and a focusing point (15) of the lens, from which are obtained the setting values for the horizontal deflections of the pictures of both cameras (1, 2).

17. Device according to claim 13 for implementing the process of claim 8, **characterized** in that a comparator is provided for the reproductions generated by the cameras (1, 2), the video storage and the monitor or video screen and for geometrically error-free reproductions, that the comparator is connected to a unit for calculating the correcting values, and that the correcting values can be put into a device for changing the video signals generated by the cameras (1, 2).

18. Device according to claim 17, **characterized** in that each of the readout logics of the cameras (1, 2) comprises one correcting unit (46, 48) for influencing the video signals generated by the cameras (1, 2).

19. Device according to claim 17, **characterized** in that the processing units (11, 12) following the cameras (1,2) and exhibiting video storages are connected to one correcting value storage (50, 52) each storing correcting values for eliminating picture distortions and/or differences in the two reproductions.

20. Device according to claim 17, **characterized** in that the video storage (19) preceding the monitor (8) or the video screen is connected to a correcting value processing unit (54) with which picture distortions and/or differences in the two reproductions can be eliminated.

21. Device according to claim 14, **characterized** in that two additional offset controls are provided that can be connected via a change-over switch to a vertical output stage of the monitor.

22. Device according to claim 15, **characterized** in that two additional offset controls are provided the values of which can be conveyed alternately to the data pointer.

## Revendications

1. Procédé pour la prise de vue et la reproduction d'images tridimensionnelles, comportant deux caméras qui sont mises au point sur un ou plusieurs objets à représenter, ainsi qu'un moniteur, ainsi que des organes de traitement pour les signaux d'image produits par les caméras et ainsi que deux écrans associés aux yeux de l'observateur et alternativement actionnés, caractérisé par le fait que les deux caméras (1, 2) sont, par leur axe optique (4, 5), réglées de façon fixe sur un plan de convergence (7) dans lequel leurs axes optiques (4, 5) se recoupent en un point (6), qu'en cas de mise au point des deux caméras (1, 2) sur le ou les objets situés dans un plan d'observation placé à une certaine distance du plan de convergence (7), les informations, relatives à l'image, produites par les deux caméras sont représentées sur le moniteur (8) décalées, l'une par rapport à l'autre, dans le sens horizontal, d'une valeur déterminée à partir de la distance entre le plan de convergence et le plan d'observation.

2. Procédé selon la revendication 1, caractérisé par le fait que, dans le plan d'observation choisi qui est plus proche des caméras (1, 2) que le plan de convergence (7), les informations, relatives à l'image, produites par les caméras (1, 2) sont représentées l'une à côté de l'autre de façon correspondant à la position, à droite ou à gauche, des caméras (1, 2) par rapport à l'objet ou aux objets et que, dans le cas d'un plan d'observation qui est plus éloigné des caméras (1, 2) que le plan de convergence, la position des informations, relatives à l'image, représentées, et provenant de la caméra de droite ou de gauche (1, 2) sont échangées entre elles.

3. Procédé selon les revendications 1 ou 2, caractérisé par le fait que la valeur du décalage dépend d'un premier angle que font les axes optiques (4, 5) des caméras (1, 2) dans la position réglée sur le plan de convergence (7) et d'un autre angle que font les axes optiques lors d'une mise au point sur un plan d'observation déplacé par rapport au plan de convergence.

4. Procédé selon l'une ou plusieurs des revendications 1 à 3, caractérisé par le fait que sont produits des signaux qui déterminent la valeur du décalage mutuel des images et commande la position des images sur le moniteur (8) ou sur un écran.

5. Procédé selon l'une ou plusieurs des revendications 1 à 4, caractérisé par le fait que les informations, relatives à l'image, des deux caméras (1, 2) sont numérisées et entrées dans une mémoire d'images dans laquelle les images des deux caméras (1, 2) sont mémorisées en correspondance avec le décalage prévu avant que la mémoire d'images soit lue pour la présentation de son contenu sur le moniteur (8) ou sur un écran.

6. Procédé selon l'une ou plusieurs des revendications 1 à 4, caractérisé par le fait que les informations, relatives à l'image, provenant des deux caméras (1, 2) sont, après la numérisation, traitées, au moyen d'un traitement de l'image en temps réel, en correspondance avec le décalage, et sont ensuite représentées sur le moniteur (8) ou sur l'écran.

7. Procédé selon l'une ou plusieurs des revendications précédentes, caractérisé par le fait qu'avant le décalage les informations, relatives à l'image, produites par les caméras (1, 2) sont chacune corrigées au moyen de représentations affinées.

8. Procédé selon l'une ou plusieurs des revendications précédentes, caractérisé par le fait que l'on détermine à l'avance les écarts entre les représentations de l'objet ou des objets et une représentation exacte, provoqués par au moins un composant, produisant des écarts, de la chaîne du système allant des caméras aux éléments de représentation de l'image et que, pour au moins un composant de la chaîne du système, on introduit des valeurs correctrices qui correspondent aux écarts déterminés à l'avance.

9. Procédé selon la revendication 7 ou 8, caractérisé par le fait que l'on ajoute dans le circuit logique de lecture des valeurs correctrices dans au moins l'une des deux caméras.

10. Procédé selon la revendication 7 ou 8, caractérisé par le fait qu'après numérisation, et entrée dans la mémoire d'écran, des signaux d'image produits par les deux caméras, on les modifie à proportion des valeurs correctrices.

11. Procédé selon la revendication 7 ou 8, caractérisé par le fait que l'on modifie les signaux d'image amenés au moniteur ou à l'écran à proportion des valeurs correctrices.

12. Procédé selon l'une ou plusieurs des revendications précédentes, caractérisé par le fait que deux informations , relatives à l'image, qui sont obtenues à partir de positions de prise de vue différentes d'un ou de plusieurs objets avec un plan de convergence prescrit sont représentées décalées l'une par rapport à l'autre dans le sens vertical.

13. Procédé pour la prise de vue et la reproduction d'images tridimensionnelles, comportant deux caméra qui sont mises au point sur un ou plusieurs objets à représenter et à chacune desquelles est reliée une mémoire d'images vidéo, comportant un moniteur ou un écran et comportant, respectivement, deux écrans associés aux yeux d'un observateur et alternativement activés, caractérisé par le fait que les deux caméras (1, 2), par leur axe optique (4, 5), sont réglées de façon fixe sur un plan de convergence (7) dans lequel leurs axes optiques (4, 5) se recoupent en un point (6), que, lors de la mise au point des deux caméras (1, 2) sur le ou les objets situés dans un plan d'observation placé à une certaine distance du plan de convergence (7), les images, produites par les deux caméras, sont, au moyen d'un traitement de l'image en temps réel (18) qui est relié, du côté sortie, à la mémoire d'images vidéo et en aval duquel est montée une autre mémoire d'images vidéo (19) à laquelle est relié le moniteur (8) ou l'écran, et traitement de l'image qui commande les écrans et procède à un déplacement des images produites par les caméras (1, 2) et contenues dans les mémoires d'images vidéo, représentées sur le moniteur (8) décalées l'une par rapport à l'autre, dans le sens horizontal, d'une valeur déterminée par la distance entre le plan de convergence et le plan d'observation.

14. Dispositif pour la prise de vue et la reproduction d'images tridimensionnelles, comportant deux caméras qui sont mises au point sur un ou plusieurs objets à représenter et auxquelles est relié un commutateur actionné par un organe de commande de commutation, comportant un moniteur et comportant respectivement ,deux écrans associés aux yeux d'un observateur et alternativement activés, caractérisé par le fait que les deux caméras (1, 2), par leur axe optique (4, 5), sont réglées de façon fixe sur un plan de convergence (7) dans lequel leurs axes optiques (4, 5) se recoupent en un point (6), que, lors de la mise au point des deux caméras (1, 2) sur le ou les objets situés dans un plan d'observation placé à une certaine distance du plan de convergence (7), les images, produites par les deux caméras sont représentées, sur le moniteur (8), décalées l'une par rapport à l'autre dans le sens horizontal d'une valeur déterminée par la distance entre le plan de convergence et le plan d'observation, que les deux caméras (22a, 22b) peuvent être reliées, par l'intermédiaire du commutateur (23), avec le moniteur (25) qui présente un étage final horizontal (26) qui est relié à un commutateur (27) qui peut être actionné par l'organe de commande de commutation (24) et en amont duquel sont montés deux organes de commande de décalage qui sont chacun prévus pour le déplacement horizontal des images produites par les caméras (22a, 22b) et qui sont réglés en correspondance avec le déplacement des images des deux caméras (22a, 22b), et que l'organe de commande de commutation (24) commande les écrans (30).

15. Dispositif pour la prise de vue et la reproduction d'images tridimensionnelles, comportant deux caméra qui sont mises au point sur un ou plusieurs objets à représenter et auxquelles est relié un commutateur actionné par un organe de commande de commutation, ainsi qu'un moniteur, que des organes de traitement pour les signaux d'image produits par les caméras et que deux écrans associés aux yeux d'un observateur et alternativement actionnés, caractérisé par le fait que les deux caméras (1, 2), par leur axe optique (4, 5), sont réglées de façon fixe sur un plan de convergence (7) dans lequel leurs axes optiques (4, 5) se recoupent en un point (6), que, lors de la mise au point des deux caméras (1, 2) sur le ou les objets situés dans un plan d'observation placé à une certaine distance du plan de convergence (7), les images, produites par les deux caméras sont représentées, sur le moniteur (8), décalées l'une par rapport à l'autre dans le sens horizontal d'une valeur déterminée par la distance entre le plan de convergence et le plan d'observation, que les deux caméras (32, 33) sont reliées, par l'intermédiaire du commutateur (35), à une mémoire d'images vidéo (36) en aval de laquelle est monté le moniteur (43), que des adresses pour la mémoire d'images vidéo sont formées, avec un dispositif de détermination d'adresses, à partir d'indicateurs de données et de signaux de décalage en provenance de deux organes de commande de décalage qui sont réglés en correspondance avec le déplacement des images des caméras (32, 33), et que l'organe de commande de commutation (34) actionne les écrans (44).

16. Dispositif selon l'une des revendications 13 à 15, caractérisé par le fait que sur au moins une caméra (2) est prévu un détecteur (13) pour produire un signal proportionnel à la distance entre un plan de convergence fixe (7) des axes optiques (4, 5) des caméras (1, 2) et le point de réglage (15) des objectifs, signal à partir duquel on obtient des valeurs de réglage pour les déviations horizontales des images des deux caméras (1, 2).

17. Dispositif selon la revendication 13 pour la mise en oeuvre du procédé selon la revendication 8, caractérisé par le fait qu'est prévu un dispositif de comparaison entre d'une part les représentations obtenues avec les caméras (1, 2), les mémoires d'image vidéo et le moniteur ou l'écran et, d'autre part, des représentations géométriquement exemptes d'erreur, que l'organe de comparaison est relié à un organe de calcul de valeurs correctrices pour calculer des valeurs correctrices et que les valeurs correctrices peuvent être introduites dans un dispositif pour modifier les signaux d'image produits par les caméras (1, 2).

18. Dispositif selon la revendication 17, caractérisé par le fait que les circuits logiques de lecture des caméras (1, 2) présentent chacun un organe correcteur (46, 48) pour influencer les signaux d'images produits par les caméras.

19. Dispositif selon la revendication 17, caractérisé par le fait que les organes de traitement (11, 12) montés en aval des caméras (1, 2) et comprenant les mémoires d'images vidéo sont chacun reliés à une mémoire de valeurs correctrices (50, 52) qui contient les valeurs correctrices pour remédier aux déformations de l'image et/ou aux différences entre les deux représentations.

20. Dispositif selon la revendication 17, caractérisé par le fait que la mémoire d'images vidéo (19), montée en amont du moniteur (8) ou de l'écran est reliée à un organe de traitement des valeurs correctrices (54) avec lequel on peut remédier aux déformations de l'image et/ou aux différences des deux représentations.

21. Dispositif selon la revendication 14, caractérisé par le fait que sont prévus deux autres organes de commande de décalage qui peuvent être mis en circuit, par l'intermédiaire d'un commutateur, sur un étage final vertical du moniteur.

22. Dispositif selon la revendication 15, caractérisé par le fait que sont prévus deux autres organes de commande de décalage dont les valeurs peuvent être alternativement amenées à l'indicateur de données.
